# EUROPÄISCHE PATENTSCHRIFT

(11) **EP 3 189 383 B1**
(45) Veröffentlichungstag und Bekanntmachung des Hinweises auf die Patenterteilung: **03.02.2021**
(21) Anmeldenummer: 15756139.0
(22) Anmeldetag: 21.08.2015
(51) Int. Cl.: G05B 15/02, G05B 19/042

(54) **GENERISCHES BEDIENELEMENT FÜR VERNETZTE HAUSGERÄTE**
GENERIC OPERATING ELEMENT FOR NETWORKED DOMESTIC APPLIANCES
ÉLÉMENT DE COMMANDE GÉNÉRIQUE POUR APPAREILS MÉNAGERS EN RÉSEAU

(30) Priorität: 03.09.2014 DE 102014217616
(43) Veröffentlichungstag der Anmeldung: 12.07.2017
(73) Patentinhaber: BSH Hausgeräte GmbH, 81739 München (DE)
(72) Erfinder: KOBER, Christoph, 83624 Otterfing (DE); PIETSCH, Ingo, 81829 München (DE); WINDE, Mirco, 81667 München (DE); WÖRNER, Andreas, 81541 München (DE)
(86) Internationale Anmeldenummer: PCT/EP2015/069201
(87) Internationale Veröffentlichungsnummer: WO 2016/034432

(56) Entgegenhaltungen:
- WO-A1-2014/109156
- US-A1- 2012 130 513
- US-A1- 2012 303 140
- US-A1- 2013 304 241

## Beschreibung

Die Erfindung betrifft ein Verfahren und eine entsprechende Vorrichtung, durch die vernetzte Hausgeräte in effizienter Weise bedient und überwacht werden können.

Vernetzte Hausgeräte, die über eine App oder eine Web-basierte Anwendung bedient und überwacht werden können, sind bekannt. Eine der Herausforderungen bei der Entwicklung von derartigen Anwendungen stellt dabei die Vielzahl der unterschiedlichen Hausgerätetypen mit ihren jeweiligen Domänen, spezifischen Funktionen, Parametern und Optionen sowie deren jeweiligen Abhängigkeiten dar. Diese unterschiedlichen Aspekte können sich darüber hinaus während der Laufzeit der Hausgeräte und/oder abhängig von verwendetem Hausgerätezubehör (wie z.B. einem Fleischtemperaturfühler bei einem Backofen) dynamisch verändern. Eine weitere Herausforderung stellt die Tatsache dar, dass typischerweise für jede Art / für jeden Typ von Hausgeräten eine Vielzahl von unterschiedlichen Einzelgeräten mit unterschiedlichem Funktionsumfang existiert.

Für diese Problematik existieren verschiedene Lösungsansätze. Die Bedienelemente einer Bedienanwendung können z.B. spezifisch für jedes einzelne Hausgerät und für alle Varianten von Steuergeräten (Smart Devices, Tablet PCs, Smartphones) entwickelt oder optimiert werden. Diese Lösung ist sehr aufwändig und es können daher meist nur wenige ausgesuchte Geräte bedient werden. Desweiteren kann der Funktionsumfang eines Hausgeräts, der über eine Bedienanwendung bedient werden kann, im Vergleich zum Funktionsumfang am Hausgerät selber reduziert sein. Dabei werden häufig nur die Grundfunktionen bedienbar gemacht, welche die meisten Hausgeräte einer bestimmten Klasse besitzen. Außerdem werden typischerweise dynamische Änderungen des Funktionsumfanges, der zugehörigen Parameter oder Optionen in Abhängigkeit der aktuell gewählten Funktion, des aktuellen Betriebszustandes oder von dem verwendeten Hausgerätezubehör nicht auf der Bedienanwendung abgebildet. Der Nutzer erhält dann meist eine Information oder Fehlermeldung, wenn er versucht über die Bedienanwendung auf aktuell nicht verfügbare Funktionen zuzugreifen. Durch unterschiedliche Bedienanwendungen für unterschiedliche Hausgeräte können die Potentiale eines vereinfachten, Geräteart- und Geräteübergreifenden Bedienkonzeptes meist nicht genutzt werden.

Dokument US2013/0304241 A1 beschreibt eine zentrale Steuerung für über ein Kommunikationsnetzwerk angeschlossene Haushaltsgeräte, mit deren Hilfe der Status der Geräte angezeigt werden kann und Befehle an die einzelnen Geräte übermittelt werden können. Dokument WO2014/109156 A1 sowie das Familienmitglied US2015/358176 A1 A1 offenbaren eine Managemententität für elektrische Geräte, die über ein Netz mit den zu managenden Geräten verbunden ist. Aufgabe ist es angeschlossene Geräte zentral zu verwalten, dazu Gerätedaten zu sammeln und auf der Managemententität im Rahmen einer graphischen Oberfläche anzuzeigen. Die Daten können den Funktionsumfang des Gerätes, den Status des Gerätes, und Daten von Sensoren des Gerätes enthalten. Über die graphische Oberfläche können auch Befehle an Geräte übermittelt werden.

Das vorliegende Dokument befasst sich mit der technischen Aufgabe in effektiver Weise eine Hausgeräte-übergreifende Fernbedienung für eine Vielzahl von Hausgeräten bereitzustellen.

Die Aufgabe wird durch die unabhängigen Ansprüche gelöst. Vorteilhafte Ausführungsformen werden u.a. in den abhängigen Ansprüchen beschrieben.

Gemäß einem Aspekt wird ein Verfahren zur Erstellung einer Bedienschnittstelle für ein erstes Hausgerät aus einer Vielzahl von Hausgeräten beschrieben. Die Hausgeräte können z.B. ein oder mehrere Öfen, ein oder mehrere Spülmaschinen, ein oder mehrere Waschmaschinen, ein oder mehrere Trockner, etc. umfassen. Die Bedienschnittstelle kann auf einem elektronischen Steuergerät bereitgestellt werden. Das elektronische Steuergerät kann ein Smartphone, ein Tablet PC, einen Laptop PC, etc. umfassen. Das elektronische Steuergerät kann mit dem ersten Hausgerät über ein KommunikationsNetzwerk (z.B. über ein drahtloses Netzwerk wie WLAN, UMTS, LTE) verbunden sein.

Das Verfahren umfasst das Bereitstellen einer Vielzahl von unterschiedlichen generischen Bedienelementen zur Festlegung von unterschiedlichen Funktionalitäten und/oder Parametern der Vielzahl von Hausgeräten. Außerdem umfasst das Verfahren das Ermitteln von Beschreibungsdaten für das erste Hausgerät. Die Beschreibungsdaten zeigen an, welche ein oder mehreren der Vielzahl von generischen Bedienelementen zur Bedienung des ersten Hausgeräts verwendet werden, und welche Ausprägungen von Funktionalitäten und/oder welche Parameterwerte des ersten Hausgeräts über die verwendeten ein oder mehreren generischen Bedienelemente eingestellt werden können. Desweiteren umfasst das Verfahren das Erstellen der Bedienschnittstelle für das erste Hausgerät auf der Eingabe/Ausgabeeinheit des Steuergeräts auf Basis der Vielzahl von unterschiedlichen generischen Bedienelementen und auf Basis der Beschreibungsdaten für das erste Hausgerät.

Gemäß einem Aspekt wird ein Steuergerät beschrieben, das eingerichtet ist, ein erstes Hausgerät aus einer Vielzahl von unterschiedlichen Hausgeräten zu bedienen. Das Steuergerät umfasst eine Kommunikationseinheit, die eingerichtet ist, über ein Netzwerk mit dem ersten Hausgerät zu kommunizieren. Außerdem umfasst das Steuergerät eine Eingabe/Ausgabeeinheit, die eingerichtet ist, eine Bedienschnittstelle für das erste Hausgerät anzuzeigen und Eingaben an der Bedienschnittstelle zu erfassen. Desweiteren umfasst das Steuergerät einen Prozessor, der eingerichtet ist, eine Vielzahl von unterschiedlichen generischen Bedienelementen zur Festlegung von Ausprägungen von unterschiedlichen Funktionalitäten und/oder von Werten von unterschiedlichen Parametern der Vielzahl von unterschiedlichen Hausgeräten bereitzustellen. Der Prozessor ist weiter eingerichtet, Beschreibungsdaten für das erste Hausgerät zu ermitteln. Die Beschreibungsdaten zeigen an, welche ein oder mehreren der Vielzahl von generischen Bedienelementen zur Bedienung des ersten Hausgeräts verwendet werden, und welche (Ausprägungen von) Funktionalitäten und/oder welche Parameter (bzw. Parameterwerte) des ersten Hausgeräts über die verwendeten ein oder mehreren generischen Bedienelemente eingestellt werden können. Außerdem ist der Prozessor eingerichtet, die Bedienschnittstelle für das erste Hausgerät auf Basis der Vielzahl von unterschiedlichen generischen Bedienelementen und auf Basis der Beschreibungsdaten für das erste Hausgerät zu erstellen.

Gemäß einem weiteren Aspekt wird ein Software (SW) Programm beschrieben. Das SW Programm kann eingerichtet werden, um auf einem Prozessor (z.B. auf einem Prozessor eines elektronischen Steuergeräts) ausgeführt zu werden, und um dadurch das in diesem Dokument beschriebene Verfahren auszuführen.

Gemäß einem weiteren Aspekt wird ein Speichermedium beschrieben. Das Speichermedium kann ein SW Programm umfassen, welches eingerichtet ist, um auf einem Prozessor ausgeführt zu werden, und um dadurch das in diesem Dokument beschriebene Verfahren auszuführen.

Es ist zu beachten, dass die in diesem Dokument beschriebenen Verfahren, Vorrichtungen und Systeme sowohl alleine, als auch in Kombination mit anderen in diesem Dokument beschriebenen Verfahren, Vorrichtungen und Systemen verwendet werden können. Desweiteren können jegliche Aspekte der in diesem Dokument beschriebenen Verfahren, Vorrichtung und Systemen in vielfältiger Weise miteinander kombiniert werden. Insbesondere können die Merkmale der Ansprüche in vielfältiger Weise miteinander kombiniert werden.

Im Weiteren wird die Erfindung anhand von Ausführungsbeispielen näher beschrieben. Dabei zeigen
Figur 1 ein beispielhaftes Netzwerk mit einer Vielzahl von Hausgeräten;
Figur 2 einen beispielhaften Aufbau einer Bedienschnittstelle;
Figur 3 einen beispielhaften Aufbau einer Beschreibungsdatei für die Bedienschnittstelle eines Hausgeräts; und
Figur 4 ein Flussdiagramm eines beispielhaften Verfahrens zur Erstellung einer Bedienschnittstelle für ein Hausgerät.

Wie eingangs dargelegt, befasst sich das vorliegende Dokument mit der effizienten Bereitstellung von Bedienschnittstellen für eine Vielzahl von Hausgeräten.

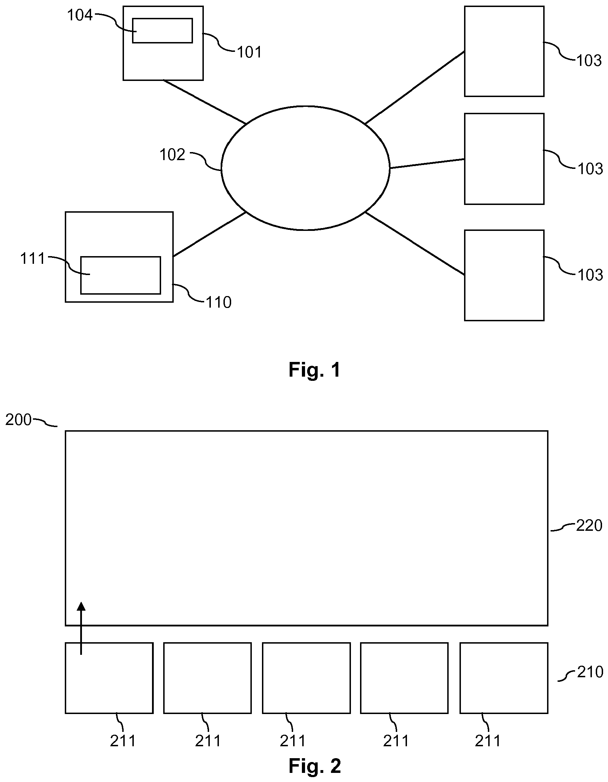

Fig. 1 zeigt eine Vielzahl von Hausgeräten 103 (z.B. ein oder mehrere Öfen, ein oder mehrere Waschmaschinen, ein oder mehrere Trockner, ein oder mehrere Spülmaschinen, etc.) die über ein Netzwerk 102 mit einem elektronischen Steuergerät 101 verbunden sind. Das Netzwerk 102 kann ein drahtloses und/oder ein drahtgebundenes Netzwerk umfassen. Beispielhafte drahtlose Netzwerke umfassen ein WLAN, ein UMTS und/oder ein LTE Netzwerk. Das elektronische Steuergerät 101 kann einen Tablet PC, ein Smartphone oder einen Laptop PC umfassen. Das elektronische Steuergerät 101 umfasst eine Eingabe/Ausgabeeinheit 104 (z.B. einen berührungsempfindlichen Bildschirm oder ein Touchscreen), die eingerichtet ist, bildliche Informationen auszugeben und eine Eingabe eines Nutzers zu erfassen. Insbesondere kann die Eingabe/Ausgabeeinheit 104 eingerichtet sein, eine bildliche Darstellung einer Bedienschnittstelle für ein Hausgerät 103 auszugeben und Eingaben an der Bedienschnittstelle zu erfassen.

Das elektronische Steuergerät 101 umfasst einen Prozessor, der eingerichtet ist, ein oder mehrere Softwareprogramme und/oder Instruktionen auszuführen. Insbesondere kann das elektronische Steuergerät 101 eingerichtet sein, anhand eines von dem Prozessor ausgeführten Bedienprogramms die Vielzahl von Hausgeräten 103 über das Netzwerk 102 zu bedienen und/oder Statusinformationen bzgl. der Vielzahl von Hausgeräten 103 über das Netzwerk 102 zu beziehen. Das Bedienprogramm kann die in diesem Dokument beschriebene Bedienschnittstelle umfassen. Desweiteren kann das elektronische Steuergerät 101 eingerichtet sein, mittels des Bedienprogramms auf einen externen Rechner (z.B. einen Server) 110 zuzugreifen. Der Rechner 110 kann eine Speichereinheit 111 umfassen, auf der Informationen bzgl. ein oder mehrerer der Vielzahl von Hausgeräten 103 gespeichert sind. Beispielhafte Informationen sind eine Beschreibungsdatei für eine Bedienschnittstelle eines Hausgeräts 103, Bedienungsanleitungen, Rezeptsammlungen, Einträge aus Bedienerforen, etc.

Somit kann das in Fig. 1 dargestellte elektronische Steuergerät 101 dazu verwendet werden, ein oder mehrere der Hausgeräte 103 zu steuern und/oder Statusinformationen bzgl. der ein oder mehreren Hausgeräte 103 zu beziehen. Dazu kann das elektronische Gerät 101 ggf. auf den Rechner 110 (z.B. einen Web-Server) zugreifen, um ein Webbasiertes Bedienprogramm auszuführen. Alternativ oder ergänzend kann das Bedienprogramm (z.B. über eine App) zumindest teilweise auf dem elektronischen Gerät 101 bereitgestellt werden.

Wie bereits oben dargelegt befasst sich das vorliegende Dokument mit einem Verfahren, durch welches vernetzte Hausgeräte 103 über eine App oder über eine Webseite oder über ein sonstiges externes, vernetztes Steuergerät 101 bedient werden können. Dabei soll eine Bedienschnittstelle mit ein oder mehreren Bedienelementen auf der App, der Webseite oder der Software eines Steuergeräts 101 generiert werden, wobei die Bedienschnittstelle eine einfache, Hausgeräte-spezifische Bedienung von beliebigen Arten/Typen von Hausgeräten 103 mit beliebigen Funktionsumfängen ermöglicht, ohne dass dabei für jede Hausgeräteart oder für jedes Hausgerät 103 mit unterschiedlichem Funktionsumfang eine eigene, passende Bedienschnittstelle entwickelt und umgesetzt werden muss. Desweiteren soll in effektiver Weise eine dynamische Anpassung der Bedienschnittstelle und der einzelnen Bedienelemente an aktuelle Gerätezustände und an die im jeweiligen Zustand zur Verfügung stehenden Funktionen und Parameterbereiche sowie Optionen ermöglicht werden. Für den Nutzer ergibt sich so eine generische Bedienschnittstelle für die Steuerung von Hausgeräten über Apps, Webseiten oder Software auf einem Steuergerät 101, durch welche alle Arten von Hausgeräten 103 mit beliebigen Ausprägungen mit einem einheitlichen Interaktionskonzept bedient werden können.

Fig. 2 zeigt einen beispielhaften Aufbau einer Bedienschnittstelle 200 für ein Hausgerät 103. Die Bedienschnittstelle 200 kann auch als Multi-Control Panel (MCP) bezeichnet werden. Die Bedienschnittstelle 200 umfasst einen Bedienelemente-Bereich 210 mit ein oder mehreren Bedienelementen 211. Desweiteren kann die Bedienschnittstelle 200 einen Detail-Bereich 220 umfassen, in dem für jeweils ein Bedienelement 211 detaillierte Informationen angezeigt und Eingaben erfasst werden können. Die Bedienschnittstelle 200 kann durch die Eingabe/Ausgabeeinheit 104 des Steuergeräts 101 angezeigt werden. Desweiteren können Eingaben auf der Bedienschnittstelle 200 über die Eingabe/Ausgabeeinheit 104 erfasst werden. In einem bevorzugten Beispiel umfasst die Eingabe/Ausgabeeinheit 104 einen berührungsempfindlichen Bildschirm auf dem die Bedienschnittstelle 200 dargestellt werden kann. Eine Betätigung der Bedienelemente 211 kann dann durch Berühren der Bedienelemente 211 (bzw. der entsprechenden Icons) erfolgen.

Die Bedienschnittstelle 200 für ein Hausgerät 103 kann in automatischer Weise erstellt werden. Zu diesem Zweck kann eine Vielzahl von vordefinierten generischen Bedienelementen 211 bereitgestellt werden. Die generischen Bedienelemente 211 können z.B. auf dem Steuergerät 101 oder auf dem zentralen Rechner 110 hinterlegt werden. Jedes generische Bedienelement 211 kann auf die Einstellung und/oder Steuerung eine Funktionalität und/oder eines Parameters von Hausgeräten 103 gerichtet sein. Beispielhafte generische Bedienelemente 211 sind:
- ein Programm-Bedienelement 211, durch welches die Auswahl eines Programms eines Hausgeräts 103 ermöglicht wird;
- ein Zeit-Bedienelement 211, durch welches eine Startzeit und/oder eine Stoppzeit zur Durchführung eines Programms eines Hausgeräts 103 festgelegt werden kann;
- ein Zeitdauer-Bedienelement 211, durch welches die Betriebsdauer eines Hausgeräts 103 festgelegt werden kann;
- ein Options-Bedienelement 211, durch welches Optionen (z.B. für die unterschiedlichen Programme) eines Hausgeräts 103 festgelegt werden können;
- ein Temperatur-Bedienelement 211, durch welches eine Betriebstemperatur des Hausgeräts 103 festgelegt werden kann; und/oder
- ein Start/Stopp-Bedienelement 211, durch welches der Betrieb eines Hausgeräts 103 gestartet, gestoppt und/oder angehalten werden kann.

Für die einzelnen generischen Bedienelemente 211 kann eine bildliche Darstellung und eine Interaktionsmöglichkeit mit einem Nutzer festgelegt werden. Beispielsweise kann für das Programm-Bedienelement 211 festgelegt werden, dass ein aktuell selektiertes Programm auf dem Bedienelement 211 in dem Bedienelemente-Bereich 210 dargestellt wird, und/oder dass eine Auswahl eines Programms über eine angezeigte Liste von Programmen im Detail-Bereich 220 erfolgt. Für ein Zeit-Bedienelement 211 kann festgelegt werden, dass aktuelle ausgewählte Start- / Stoppzeiten auf dem Bedienelement 211 in dem Bedienelemente-Bereich 210 dargestellt werden, und dass eine Änderung der Zeiten über dargestellte Uhren in dem Detail-Bereich 220 erfolgt. Für ein Zeitdauer-Bedienelement 211 kann festgelegt werden, dass eine aktuell ausgewählte Zeitdauer auf dem Bedienelement 211 in dem Bedienelemente-Bereich 210 dargestellt wird, und dass eine Einstellung der Zeitdauer über ein Scroll-Rad auf dem Bedienelement 211 in dem Bedienelemente-Bereich 210 erfolgt. Für ein Options-Bedienelement 211 kann festgelegt werden, dass die Optionen in dem Detail-Bereich 220 angezeigt und ausgewählt werden können. Für ein Temperatur-Bedienelement 211 kann festgelegt werden, dass eine aktuell ausgewählte Temperatur auf dem Bedienelement 211 in dem Bedienelemente-Bereich 210 dargestellt wird, und dass eine Einstellung der Temperatur über ein Scroll-Rad auf dem Bedienelement 211 in dem Bedienelemente-Bereich 210 erfolgen kann. Für ein Start/Stopp-Bedienelement 211 kann festgelegt werden, dass ein Start bzw. ein Stopp bzw. eine Pause durch Betätigung des Bedienelements 211 erfolgt und dass der aktuelle Status auf dem Bedienelement 211 in dem Bedienelemente-Bereich 210 angezeigt wird.

Somit kann über die generischen Bedienelemente 211 eine einheitliche Interaktion für die Einstellung der unterschiedlichen Funktionalitäten / Parameter eines Hausgeräts 103 erfolgen. Insbesondere kann anhand der generischen Bedienelemente 211 eine einheitliche Bedienschnittstelle 200 für eine Vielzahl von unterschiedlichen Hausgeräten 103 bereitgestellt werden.

Zur Erstellung einer spezifischen Bedienschnittstelle 200 für ein spezifisches Hausgerät 103 kann das spezifische Hausgerät 103 eine Beschreibungsdatei 300 (auch als Beschreibungsdaten 300 bezeichnet) bereitstellen, in der spezifiziert sein kann, welche generischen Bedienelemente 211 für die spezifische Bedienschnittstelle 200 verwendet werden, und welche konkreten Ausprägungen von Funktionalitäten / welche konkreten Werte von Parametern anhand der generischen Bedienelemente 211 ausgewählt bzw. eingestellt werden können.

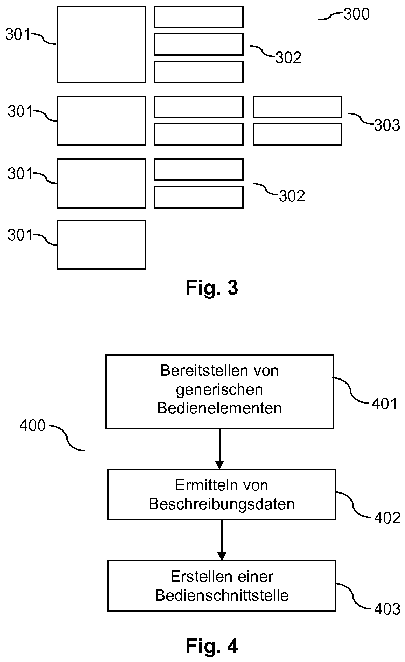

Fig. 3 zeigt eine beispielhafte Beschreibungsdatei 300 für ein Hausgerät 103. Die Beschreibungsdatei 300 zeigt an (Referenzzeichen 301), welche generischen Bedienelemente 211 zur Steuerung des Hausgeräts 103 erforderlich sind. Desweiteren zeigt die Beschreibungsdatei 300 an, welche konkreten Ausprägungen von Funktionalitäten und/oder welche Parameterbereiche und/oder welche Optionen über die jeweiligen Bedienelemente 211 eingegeben werden können (Referenzzeichen 302). Beispielsweise kann für
- ein Programm-Bedienelement 211 angezeigt werden, welche spezifischen Programme für das spezifische Hausgerät 103 ausgewählt werden können;
- ein Options-Bedienelement 211 angezeigt werden, welche konkreten Optionen für das spezifische Hausgerät 103 ausgewählt werden können; und/oder
- ein Temperatur-Bedienelement 211 angezeigt werden, welcher Temperaturbereich für das spezifische Hausgerät 103 ausgewählt werden kann.

Desweiteren kann die Beschreibungsdatei 300 Abhängigkeiten zwischen den Einstellungen in den unterschiedlichen Bedienelementen 211 spezifizieren (Referenzzeichen 303). Insbesondere können die möglichen Attribute bzw. Ausprägungen eines zweiten Bedienelements 211 (z.B. eines Temperatur-Bedienelements) davon abhängen, welches Attribut bzw. welche Ausprägung für ein erstes Bedienelement 211 (z.B. für ein Programm-Bedienelement) ausgewählt wurde.

Anhand der Beschreibungsdatei 300 können somit die zur Bedienung eines spezifischen Hausgeräts 103 erforderlichen Bedienelemente 211 aus der Liste von verfügbaren Bedienelementen 211 ausgewählt werden. Außerdem können die möglichen Attribute (z.B. Ausprägungen von Funktionalitäten, Parameterbereiche, Optionen, etc.), welche über die ausgewählten Bedienelemente 211 eingegeben werden können, definiert werden. So können in effizienter Weise für unterschiedliche Hausgeräte 103 unterschiedliche Bedienschnittstellen 200 bereitgestellt werden, die jedoch für einen Nutzer ein einheitliches Interaktionskonzept bereitstellen.

Die einzelnen Bedienelemente 211 ermöglichen es einem Nutzer unterschiedliche Parameter / Funktionalitäten eines Hausgeräts 103 insbesondere eines Haushaltsgerätes festzulegen. Ein Bedienelement 211 kann dabei eingerichtet sein, ein Steuersignal zu generieren, welches eine an dem Bedienelement 211 erfolgte Eingabe wiedergibt (z.B. die Auswahl eines Programms und/oder die Festlegung einer Temperatur). Das Steuersignal eines Bedienelements 211 kann über das Netzwerk 102 an das zu bedienende Hausgerät 103 weitergeleitet werden, und so eine entsprechende Einstellung an dem Hausgerät 103 bewirken.

In diesem Dokument wird somit eine generische Bedienschnittstelle 200 mit ein oder mehreren generischen Bedienelementen 211 für Hausgeräte beschrieben. Die generische Bedienschnittstelle 200 wird in diesem Dokument auch als Multi-Control Panel (MCP) bezeichnet. Das MCP 200 enthält einzelne, generische Bedienelemente 211 für die unterschiedlichen Arten von Funktionalität, die zur Steuerung eines Hausgerätes 103 erforderlich sind. Am Beispiel eines Backofens können dies z.B. jeweils ein generisches Bedienelement für die Heizart (Oberhitze, Unterhitze, etc.), die Temperatur, die Startzeit, die Laufzeit und weitere Optionen, sowie der Gerätestart sein. Bei einer Geschirrspülmaschine können generische Bedienelemente 211 für das Spülprogramm, für den Programmstart, für Programmoptionen und für den Gerätestart verwendet werden.

Innerhalb jedes der generischen Bedienelemente 211 können genau diejenigen Funktionen dargestellt und bedienbar gemacht werden, die ein spezifisches Hausgerät 103 aufweist. So können z.B. bei einem Ofen je nach Ofentyp im Bereich der Heizarten nur wenige Standardheizarten wie Heißluft, Ober-Unterhitze und Grill oder eine Vielzahl von unterschiedlichen Heizarten dargestellt werden. Die Inhalte der weiteren generischen Bedienelemente 211 können auf die Auswahl der vorherigen Bedienelemente 211 passend adaptiert werden. Wird z.B. im Bedienelement 211 für die Heizart (d.h. in einem Programm-Bedienelement) bei einem Backofen die Heizart "Heißluft" gewählt, so wird typischerweise im generischen Bedienelement 211 für die Temperatur eine andere Auswahl an möglichen Temperaturen angezeigt als wenn als Heizart die Funktion "Grillen" gewählt wurde. Wird andererseits zusätzlich ein Fleischtemperaturfühler an den Backofen gesteckt, so kann an dem MCP 200 ein generisches Bedienelement 211 (z.B. ein Bedienelement 211 für die Laufzeit bzw. Dauer) dynamisch entfernt werden und durch ein Bedienelement 211 zur Einstellung der Kerntemperatur ersetzt werden.

Das gewünschte Verhalten der Bedienschnittstelle 200 kann wie folgt erreicht werden: Für jedes über das MCP 200 zu steuernde Hausgerät 103 wird eine technische Beschreibungsdatei 300 erzeugt und bereitgestellt. Die Beschreibungsdatei 300 enthält den Funktionsumfang, die zugehörigen Parametersätze und Optionen sowie die jeweiligen Abhängigkeiten für ein Hausgerät 103. Für die Obermenge aller Gerätearten und deren Funktionen, Parameter und Optionen werden generische Bedienelemente 211 bereitgestellt. Bei der Verbindung eines Hausgerätes 103 mit der entsprechenden App, Website oder SW Programm eines Steuergeräts 101, wird die Beschreibungsdatei 300 des Hausgeräts 103 eingelesen und regelbasiert interpretiert. Dadurch werden die für die Bedienschnittstelle 200 des Hausgeräts 103 erforderlichen generischen Einzelbedienelemente 211 identifiziert und in der passenden Reihenfolge und Ausprägung von der Eingabe/Ausgabeeinheit 104 des Steuergeräts 101 angezeigt. Ebenso wird auf Basis der Beschreibungsdatei 300 der jeweilige Umfang an Funktionen, Parameterbereichen und Optionen ermittelt, die in jedem generischen Bedienelement 211 angezeigt werden.

Wie oben dargelegt, sind das Hausgerät 103 und das Steuergerät 101 zur Realisierung der Fernbedienung typischerweise über ein drahtloses Netzwerk 102, z.B. WLAN, ZigBee, Bluetooth o.ä., mit einander verbunden. Über dieses Netzwerk 102 kann das Steuergerät 101 Informationen über den aktuellen Status eines Hausgeräts 103 sowie über das Einsetzen und/oder Entfernen von Sonderzubehör erhalten, was einen Einfluss auf die aktuellen Bedienmöglichkeiten des Hausgeräts 103 haben kann. Über ein hinterlegtes Regelwerk in der App, der Website bzw. der Software des Steuergeräts 101 und/oder innerhalb der Beschreibungsdatei 300 für das jeweilige Hausgerät 103 kann sich das MCP 200 für jedes Hausgerät 103 sowie für dessen aktuellen Betriebszustand passend konfigurieren und damit die Steuerung von beliebigen Arten von Hausgeräten 103 und deren Ausprägungen aufwandsarm ermöglichen.

Fig. 4 zeigt ein Flussdiagramm eines beispielhaften Verfahrens 400 zur Erstellung einer Bedienschnittstelle 200 für ein erstes Hausgerät 103. Das erste Hausgerät 103 ist dabei ein Hausgerät 103 aus einer Vielzahl von unterschiedlichen Hausgeräten 103, insbesondere aus einer Vielzahl von Hausgeräten 103 von unterschiedlichem Typ. Beispielhafte Typen von Hausgeräten 103 sind Öfen, Spülmaschinen, Mikrowellenherde, Waschmaschinen, Trockner, Kühlgeräte, Gefriergeräte, Kaffee/Espressozubereiter, Kleingeräte, etc. Darüber hinaus können die unterschiedlichen Hausgeräte 103 unterschiedliche Modelle von Hausgeräten 103 vom gleichen Typ umfassen, z.B. unterschiedliche Modelle von Öfen, Spülmaschinen, Mikrowellenherde, Waschmaschinen, Trocknern, etc.

Die unterschiedlichen Modelle bzw. die unterschiedlichen Typen von Hausgeräten können unterschiedliche einstellbare Funktionalitäten und/oder Parameter aufweisen. Beispielhafte Funktionalitäten und/oder Parameter sind vordefinierte Ablaufprogramme eines Hausgeräts 103, ein Start- und/oder Stoppzeitpunkt eines vordefinierten Ablaufprogramms eines Hausgeräts 103, eine einstellbare Betriebsdauer eines Hausgeräts 103, einstellbare Optionen für den Betrieb eines Hausgeräts 103, eine Betriebstemperatur eines Hausgeräts 103,eine Betriebsleistung eines Hausgeräts 103 und/oder ein Starten, ein Stoppen und/oder ein Unterbrechen des Betriebs eines Hausgeräts 103.

Das Verfahren 400 umfasst das Bereitstellen 401 von einer Vielzahl von unterschiedlichen generischen Bedienelementen 211 zur Festlegung von unterschiedlichen Funktionalitäten und/oder Parametern der Vielzahl von Hausgeräten 103. Dabei kann typischerweise ein generisches Bedienelement 211, welches für die Einstellung einer bestimmten Funktionalität und/oder eines bestimmten Parameters ausgelegt ist, für die Einstellung dieser bestimmten Funktionalität und/oder dieses bestimmten Parameters für mehrere der Vielzahl von unterschiedlichen Hausgeräten 103 verwendet werden. Das generische Bedienelement 211 ist somit in generischer Weise für die Einstellung einer bestimmten Funktionalität und/oder eines bestimmten Parameters ausgelegt, unabhängig von den konkreten Ausprägungen der bestimmten Funktionalität und/oder des bestimmten Parameters für ein konkretes Hausgerät 101.

Beispielsweise kann die Vielzahl von generischen Bedienelementen 211 ein Programm-Bedienelement 211 umfassen, durch das die Auswahl eines Programms eines Hausgeräts 103 ermöglicht wird. Dabei ist das generische Programm-Bedienelement 211 unabhängig von den konkreten Ablaufprogrammen die für ein bestimmtes Hausgerät 103 einstellbar sind. Alternativ oder ergänzend kann die Vielzahl von generischen Bedienelementen 211 ein Zeit-Bedienelement 211 umfassen, durch das eine Startzeit und/oder eine Stoppzeit zur Durchführung eines Programms eines Hausgeräts 103 festgelegt werden kann. Alternativ oder ergänzend kann die Vielzahl von generischen Bedienelementen 211 ein Zeitdauer-Bedienelement 211 umfassen, durch das die Betriebsdauer eines Hausgeräts 103 festgelegt werden kann. Alternativ oder ergänzend kann die Vielzahl von generischen Bedienelementen 211 ein Options-Bedienelement 211 umfassen, durch das Optionen eines Hausgeräts 103 festgelegt werden können. Dabei ist das generische Options-Bedienelement 211 unabhängig von den konkreten Optionen die für ein bestimmtes Hausgerät 103 einstellbar sind. Alternativ oder ergänzend kann die Vielzahl von generischen Bedienelementen 211 ein Temperatur-Bedienelement 211 umfassen, durch das eine Betriebstemperatur eines Hausgeräts 103 festgelegt werden kann. Dabei ist das generische Temperatur-Bedienelement 211 unabhängig von den konkreten Temperaturbereichen die für ein bestimmtes Hausgerät 103 einstellbar sind. Alternativ oder ergänzend kann die Vielzahl von generischen Bedienelementen 211 ein Start/Stopp-Bedienelement 211 umfassen, durch das der Betrieb eines Hausgeräts 103 gestartet, gestoppt und/oder angehalten werden kann.

Ein generisches Bedienelement 211 kann somit in generischer Weise (d.h. unabhängig von einem konkreten Hausgerät 103) ein Bedienelement 211 für eine Bedienschnittstelle 200 bereitstellen, über das thematisch ähnliche Funktionalitäten und/oder Parameter von Hausgeräten 103 eingestellt werden können, unabhängig von den konkreten Ausprägungen der Funktionalitäten und/oder Parameter für die unterschiedlichen Hausgeräte 103.

Das generische Bedienelement 211 kann eine graphische Darstellung für die Ausgabe auf einer Eingabe/Ausgabeeinheit 104 eines Steuergeräts 101 umfassen bzw. spezifizieren. Das generische Bedienelement 211 kann somit spezifizieren, wie das Bedienelement für die Einstellung einer bestimmten Funktionalität und/oder eines bestimmten Parameters graphisch dargestellt wird. Beispielsweise kann ein generisches Bedienelement 211 als eine rechteckige Kachel dargestellt werden.

Desweiteren kann das generische Bedienelement 211 spezifizieren, wie eine eingestellte Ausprägung der Funktionalität und/oder ein eingestellter Parameterwert eines Hausgeräts 103 auf der Eingabe/Ausgabeeinheit 104 dargestellt wird. Beispielsweise kann die eingestellte Ausprägung einer Funktionalität und/oder eines Parameters innerhalb der rechteckigen Kachel des Bedienelements 211 dargestellt werden. Außerdem kann das generische Bedienelement 211 einen Mechanismus festlegt, wie eine Ausprägung einer Funktionalität und/oder ein Parameterwert über die Eingabe/Ausgabeeinheit 104 eingestellt werden kann. Beispielsweise kann das generische Bedienelement 211 spezifizieren, dass zur Auswahl einer bestimmten Ausprägung, eine Liste von möglichen Ausprägungen einer Funktionalität in einem Detailbereich 220 einer Bedienschnittstelle 200 dargestellt wird.

Ein generisches Bedienelement 211 kann weiter eingerichtet sein, ein Steuersignal zu generieren, welches anzeigt, welche Ausprägung einer Funktionalität und/oder welcher Parameterwert über die Eingabe/Ausgabeeinheit 104 eingestellt wurde. Über das Steuersignal kann eine entsprechende Einstellung / Programmierung eines Hausgeräts 103 erfolgen. Insbesondere kann das Verfahren 400 das Erfassen einer Eingabe bzw. Einstellung über ein Bedienelement 211 der Bedienschnittstelle 200 des ersten Hausgeräts 103 umfassen. Es kann dann durch das Bedienelement 211 ein entsprechendes Steuersignal generiert werden. Das Steuersignal kann an das erste Hausgerät 103 gesendet werden, um eine der Eingabe entsprechende Einstellung an dem ersten Hausgerät 103 zu bewirken. So kann über ein Bedienelement 211 eine Fernbedienung des ersten Hausgeräts 103 bewirkt werden.

Das Verfahren 400 umfasst weiter das Ermitteln 402 von Beschreibungsdaten 300 bzw. von einer Beschreibungsdatei 300 für das erste Hausgerät 103. Dabei zeigen die Beschreibungsdaten 300 an, welche ein oder mehreren der Vielzahl von generischen Bedienelementen 211 zur Bedienung des ersten Hausgeräts 103 verwendet werden. Mit anderen Worten, die Beschreibungsdaten 300 zeigen an, welche generischen Bedienelemente 211 für die Erstellung der Bedienschnittstelle 200 für das erste Hausgerät 103 verwendet werden.

Desweiteren zeigen die Beschreibungsdaten 300 an, welche Funktionalitäten (insbesondere welche Ausprägungen von Funktionalitäten) und/oder welche Parameterwerte des ersten Hausgeräts 103 über die verwendeten ein oder mehreren generischen Bedienelemente 211 eingestellt werden können. Beispielsweise können die Beschreibungsdaten 300 für ein generisches Programm-Bedienelement 211 anzeigen, welche konkreten Ablaufprogramme für das erste Hausgerät 103 ausgewählt werden können. Die konkreten, auswählbaren Ablaufprogramme des ersten Hausgeräts 103 stellen dabei die möglichen Ausprägungen der Funktionalität "Ablaufprogramme" dar. Alternativ oder ergänzend können die Beschreibungsdaten 300 für ein generisches Options-Bedienelement 211 anzeigen, welche Optionen für das erste Hausgerät 103 ausgewählt werden können. Die konkreten, auswählbaren Optionen des ersten Hausgeräts 103 stellen dabei die möglichen Ausprägungen der Funktionalität bzw. des Parameters "Optionen" dar. Alternativ oder ergänzend können die Beschreibungsdaten 300 für ein generisches Temperatur-Bedienelement 211 anzeigen, welche Temperaturen (d.h. welche konkreten Parameterwerte des Parameters "Temperatur") für das erste Hausgerät 103 ausgewählt werden können.

Desweiteren können die Beschreibungsdaten 300 ein oder mehrere Abhängigkeiten zwischen einer Einstellung eines ersten Bedienelements 211 und möglichen auswählbaren (Ausprägungen von) Funktionalitäten und/oder Parameterwerten eines zweiten Bedienelements 211 spezifizieren. Beispielsweise können die einstellbaren Temperaturwerte über ein Temperatur-Bedienelement von dem im Programm-Bedienelement eingestellten Ablaufprogramm abhängen.

Das Verfahren 400 umfasst außerdem das Erstellen 403 der Bedienschnittstelle 200 für das erste Hausgerät 103 auf der Eingabe/Ausgabeeinheit 104 eines Steuergeräts 101 auf Basis der Vielzahl von unterschiedlichen generischen Bedienelementen 211 und auf Basis der Beschreibungsdaten 300 für das erste Hausgerät 103. Dabei kann das Erstellen 403 der Bedienschnittstelle 200 für das erste Hausgerät 103 insbesondere umfassen, das Auswählen der ein oder mehreren generischen Bedienelemente 211 zur Bedienung des ersten Hausgeräts 103 auf Basis der Beschreibungsdaten 300 des ersten Hausgeräts 103. Desweiteren kann das Erstellen 403 der Bedienschnittstelle 200 für das erste Hausgerät 103 umfassen, das Festlegen, auf Basis der Beschreibungsdaten 300, von den einstellbaren (Ausprägungen der) Funktionalitäten und/oder von den einstellbaren Parameterwerten des ersten Hausgeräts 103 für die ausgewählten ein oder mehreren generischen Bedienelemente 211, um ein oder mehrere entsprechende spezifische Bedienelemente 211 der Bedienschnittstelle 200 für das erste Hausgerät 103 bereitzustellen. Außerdem kann das Erstellen 403 der Bedienschnittstelle 200 für das erste Hausgerät 103 umfassen, das Ausgeben von graphischen Darstellungen der ein oder mehreren spezifischen Bedienelemente 211 der Bedienschnittstelle 200 auf der Eingabe/Ausgabeeinheit 104 des Steuergeräts 101. Dazu können die für die entsprechenden generischen Bedienelemente 211 spezifizierten graphischen Darstellungen verwendet werden.

Das Verfahren 400 ermöglicht somit durch die Verwendung einer begrenzten Anzahl von generischen Bedienelementen 211 und durch die Bereitstellung von Beschreibungsdaten 300 für eine Vielzahl von unterschiedlichen Hausgeräten 103, in effizienter Weise spezifische Bedienschnittstellen 200 für die Vielzahl von unterschiedlichen Hausgeräten 103 zu erstellen. Die so erstellen Bedienschnittstellen 200 weisen darüber hinaus eine Kohärenz auf, die es einem Nutzer ermöglicht, in einfacher Weise die Vielzahl von unterschiedlichen Hausgeräten 103 zu bedienen.

Das Verfahren 400 kann weiter umfassen, das Ermitteln eines Status und/oder einer Ausbaustufe des ersten Hausgeräts 103. Beispielsweise kann das erste Hausgerät 103 optionales Zubehör (z.B. einen Kerntemperatursensor) umfassen, welches bei der Bedienung des ersten Hausgeräts 103 berücksichtigt werden sollte. Die Beschreibungsdaten 300 des ersten Hausgeräts 103 können anzeigen, welche ein oder mehreren der Vielzahl von generischen Bedienelemente 211 in Abhängigkeit von dem Status und/oder von der Ausbaustufe zur Bedienung des ersten Hausgeräts 103 verwendet werden. Somit kann in effizienter Weise eine dynamische Anpassung der Bedienschnittstelle 200 erfolgen. Insbesondere kann das Verfahren 400 dazu umfassen, das Erkennen, dass sich der Status und/oder die Ausbaustufe des ersten Hausgeräts 103 verändert haben. Die Bedienschnittstelle 200 kann dann in Abhängigkeit von dem geänderten Status und/oder von der geänderten Ausbaustufe angepasst werden. Beispielsweise können bei Veränderung einer Ausbaustufe, ein neues Bedienelement 211 in die Bedienschnittstelle 200 aufgenommen werden und/oder unterschiedliche Ausprägungen von Funktionalitäten zur Auswahl angeboten werden.

Außerdem kann das Verfahren 400 das Ermitteln eines Typs des Steuergerätes 101 umfassen, mit dem bzw. für das die Bedienschnittstelle 200 bereitgestellt werden soll. Steuergeräte 101 unterscheiden sich z.B. in der Art der Eingabe/Ausgabeeinheit 104, in der Größe eines Bildschirms auf der die Bedienschnittstelle 200 angezeigt werden soll, in Bedienspezifika eines Betriebssystems (z.B. Android, iOS, etc.) und/oder im Hinblick auf ein Eingabegerät (Smartphone, Tablet PC, PC). Die Bedienschnittstelle 200 kann dann in Abhängigkeit von dem Typ des Steuergeräts 101 erstellt werden. Beispielsweise kann die Anzahl von Bedienelementen 211 in Abhängigkeit von dem Typ des Steuergeräts 101 auf eine bestimmte maximale Anzahl begrenzt werden. Desweiteren kann die bildliche Darstellung der Bedienelemente 211 an den Typ des Steuergeräts 101 angepasst werden. So kann die Interaktion mit dem ersten Hausgerät 103 über die Bedienschnittstelle 200 für einen Nutzer verbessert werden.

Mit Hilfe des in diesem Dokument beschriebenen Verfahrens 400 wird es möglich, den Aufwand bei der Entwicklung von Bedienschnittstellen 200 für vernetzte Hausgeräte 103 signifikant zu reduzieren. Die einmalige Entwicklung von generischen Bedienelementen 211 sowie die Bereitstellung eines Regelwerks für die Darstellung sind ausreichend, um eine korrekte und einfache Bedienung beliebiger Arten von Hausgeräten 103 zu ermöglichen. Zu diesem Zwecke wird für ein Hausgerät 103 der Funktionsumfang, die möglichen Parameterwerte und Optionen in einer Beschreibungsdatei 300 beschrieben.

Für einen Nutzer bietet das beschriebene Verfahren 400 den Vorteil, dass die Bedienelemente 211 immer den aktuell tatsächlich zu Verfügung stehenden Umfang von Einstell- und Bedienmöglichkeiten des Hausgerätes 103 abbilden. Der komplette Funktionsumfang des Hausgerätes 103 steht so auch an einem externen Bediengerät 101 zu Verfügung. Desweiteren können dynamisch auch nur diejenigen Funktionen und Parameter sowie Optionen für die Auswahl und Bedienung angeboten werden, die abhängig vom Gerätetyp, von dem aktuellen Gerätestatus sowie von dem verwendeten Gerätezubehör tatsächlich zur Verfügung stehen.

Ein weiterer Vorteil für den Nutzer besteht in einer einheitlichen Bedienlogik mittels generisch erzeugter, einheitlicher Bedienelemente 211 innerhalb des MCP 200 für unterschiedliche Arten und Ausprägungen von Hausgeräten 103, ggf. auch von unterschiedlichen Herstellern. Die einzelnen generischen Bedienelemente 211 können dabei mit Methoden des Usability Engineering für den jeweiligen Einsatzzweck optimiert werden. Desweiteren unterliegen die generischen Bedienelemente 211 nicht den unterschiedlichen Einschränkungen der jeweiligen gerätespezifischen Randbedingungen der unterschiedlichen Arten von Hausgeräten 103. Ein einmaliges Erlernen des Interaktionskonzeptes des MCP 200 genügt daher um unterschiedlichste Geräte 103 einfach bedienen zu können.

Desweiteren kann auf die individuellen Bedienspezifika der Smart Devices (Smart Phone, Tablet, PC) eingegangen werden, und ein jeweils angepasstes Modell des MCP 200 zum Einsatz kommen, welches die Usability Eigenschaften des jeweiligen Steuergerätes 101 zu Grunde legt.

Die vorliegende Erfindung ist nicht auf die gezeigten Ausführungsbeispiele beschränkt. Insbesondere ist zu beachten, dass die Beschreibung und die Figuren nur das Prinzip der vorgeschlagenen Verfahren, Vorrichtungen und Systeme veranschaulichen sollen.

### Bezugszeichenliste

- 101: elektronisches Steuergerät
- 102: (ggf. drahtloses) Netzwerk
- 103: Hausgerät
- 104: Eingabe/Ausgabeeinheit des elektronischen Geräts 101
- 110: externer Rechner
- 111: Speichereinheit des Rechners 110
- 200: Bedienschnittstelle 200
- 210: Bedienelemente-Bereich
- 211: Bedienelement
- 220: Detail-Bereich
- 300: Beschreibungsdatei bzw. Beschreibungsdaten
- 301: erforderliche Bedienelemente
- 302: mögliche Attribute (z.B. Funktionalitäten und/oder Parameterwerte)
- 303: Abhängigkeiten / Bedingungen
- 400: Verfahren zur Erstellung einer Bedienschnittstelle zur Fernbedienung eines Hausgeräts 103
- 401, 402, 403: Schritte des Verfahrens 400

## Patentansprüche

1. Verfahren (400) zur Erstellung einer Bedienschnittstelle (200) für ein erstes Hausgerät (103) aus einer Vielzahl von Hausgeräten (103), wobei das Verfahren (400) umfasst,
- Bereitstellen (401) einer Vielzahl von unterschiedlichen generischen Bedienelementen (211) zur Festlegung von unterschiedlichen Funktionalitäten und/oder Parametern der Vielzahl von Hausgeräten (103);
- Ermitteln eines Status des ersten Hausgeräts (103);
- Ermitteln (402) von Beschreibungsdaten (300) für das erste Hausgerät (103); wobei die Beschreibungsdaten (300) anzeigen,
- welche ein oder mehreren der Vielzahl von generischen Bedienelementen (211) in Abhängigkeit von dem Status zur Bedienung des ersten Hausgeräts (103) verwendet werden, und
- welche Funktionalitäten und/oder Parameterwerte des ersten Hausgeräts (103) über die verwendeten ein oder mehreren generischen Bedienelemente (211) eingestellt werden können;
- Erstellen (403) der Bedienschnittstelle (200) für das erste Hausgerät (103) auf der Eingabe/Ausgabeeinheit (104) eines Steuergeräts (101) auf Basis der Vielzahl von unterschiedlichen generischen Bedienelementen (211) und auf Basis der Beschreibungsdaten (300) für das erste Hausgerät (103) sowie auf Basis des Status und eines Regelwerks zur regelbasierten Interpretation der Beschreibungsdaten; und
- Dynamisches Anpassen der Bedienschnittstelle (200) für das erste Hausgerät (103) auf der Eingabe/Ausgabeeinheit (104) eines Steuergeräts (101) auf Basis der Vielzahl von unterschiedlichen generischen Bedienelementen (211) und auf Basis der Beschreibungsdaten (300) für das erste Hausgerät (103) sowie auf Basis des Status und eines Regelwerks zur regelbasierten Interpretation der Beschreibungsdaten, wenn erkannt wird, dass sich der Status des ersten Hausgeräts verändert hat.

2. Verfahren (400) gemäß Anspruch 1, wobei ein generisches Bedienelement (211)
- eine graphische Darstellung für die Ausgabe auf der Eingabe/Ausgabeeinheit (104) umfasst;
- spezifiziert, wie eine eingestellte Funktionalität und/oder ein eingestellter Parameterwert eines Hausgeräts (103) auf der Eingabe/Ausgabeeinheit (104) dargestellt wird; und/oder
- einen Mechanismus festlegt, wie eine Funktionalität und/oder ein Parameterwert über die Eingabe/Ausgabeeinheit (104) eingestellt werden kann.

3. Verfahren (400) gemäß einem der vorhergehenden Ansprüche, wobei die Vielzahl von generischen Bedienelementen (211) ein oder mehrere umfasst von:
- ein Programm-Bedienelement (211), durch das die Auswahl eines Programms eines Hausgeräts (103) ermöglicht wird;
- ein Zeit-Bedienelement (211), durch das eine Startzeit und/oder eine Stoppzeit zur Durchführung eines Programms eines Hausgeräts (103) festgelegt werden kann;
- ein Zeitdauer-Bedienelement (211), durch das die Betriebsdauer eines Hausgeräts (103) festgelegt werden kann;
- ein Options-Bedienelement (211), durch das Optionen eines Hausgeräts (103) festgelegt werden können;
- ein Temperatur-Bedienelement (211), durch das eine Betriebstemperatur eines Hausgeräts (103) festgelegt werden kann; und/oder
- ein Start/Stopp-Bedienelement (211), durch das der Betrieb eines Hausgeräts (103) gestartet, gestoppt und/oder angehalten werden kann.

4. Verfahren (400) gemäß einem der vorhergehenden Ansprüche, wobei ein generisches Bedienelement (211) für eine bestimmte Funktionalität und/oder für einen bestimmten Parameter zur Einstellung der bestimmten Funktionalität und/oder des bestimmten Parameters der Vielzahl von unterschiedlichen Hausgeräten (103) verwendet werden kann.

5. Verfahren (400) gemäß einem der vorhergehenden Ansprüche, wobei die Funktionalitäten und/oder Parameter ein oder mehrere umfassen von:
- vordefinierte Ablaufprogramme eines Hausgeräts (103);
- einen Start- und/oder Stoppzeitpunkt eines vordefinierten Ablaufprogramms eines Hausgeräts (103);
- eine Betriebsdauer eines Hausgeräts (103);
- einstellbare Optionen für den Betrieb eines Hausgeräts (103);
- eine Betriebstemperatur eines Hausgeräts (103); und/oder
- ein Starten, ein Stoppen und/oder ein Unterbrechen des Betriebs eines Hausgeräts (103).

6. Verfahren (400) gemäß einem der vorhergehenden Ansprüche, wobei ein generisches Bedienelement (211) eingerichtet ist, ein Steuersignal zu generieren, welches anzeigt, welche Ausprägung einer Funktionalität und/oder welcher Parameterwert über die Eingabe/Ausgabeeinheit (104) eingestellt wurde.

7. Verfahren (400) gemäß Anspruch 6, weiter umfassend,
- Erfassen einer Eingabe über ein Bedienelement (211) der Bedienschnittstelle (200) des ersten Hausgeräts (103);
- Generieren eines entsprechenden Steuersignals durch das Bedienelement (211); und
- Senden des Steuersignals an das erste Hausgerät (103), um eine der Eingabe entsprechende Einstellung an dem ersten Hausgerät (103) zu bewirken.

8. Verfahren (400) gemäß einem der vorhergehenden Ansprüche, wobei die Beschreibungsdaten (300) für
- ein generische Programm-Bedienelement (211) anzeigen, welche konkreten Ablaufprogramme für das erste Hausgerät (103) ausgewählt werden können;
- ein generisches Options-Bedienelement (211) anzeigen, welche Optionen für das erste Hausgerät (103) ausgewählt werden können; und/oder
- ein generisches Temperatur-Bedienelement (211) anzeigen, welche Temperaturen für das erste Hausgerät (103) ausgewählt werden können.

9. Verfahren (400) gemäß einem der vorhergehenden Ansprüche, wobei die Beschreibungsdaten (300) eine Abhängigkeit zwischen einer Einstellung eines ersten Bedienelements (211) und möglichen auswählbaren Funktionalitäten und/oder Parameterwerten eines zweiten Bedienelements (211) spezifizieren.

10. Verfahren (400) gemäß einem der vorhergehenden Ansprüche, wobei
- das Verfahren (400) weiter umfasst, Ermitteln einer Ausbaustufe des ersten Hausgeräts (103); und
- die Beschreibungsdaten (300) anzeigen, welche ein oder mehreren der Vielzahl von generischen Bedienelemente (211) in Abhängigkeit von der Ausbaustufe zur Bedienung des ersten Hausgeräts (103) verwendet werden.

11. Verfahren (400) gemäß Anspruch 10, weiter umfassend,
- Erkennen, dass sich der Status und/oder die Ausbaustufe des ersten Hausgeräts (103) verändert haben; und
- Anpassen der Bedienschnittstelle (200) in Abhängigkeit von dem geänderten Status und/oder von der geänderten Ausbaustufe.

12. Verfahren (400) gemäß einem der vorhergehenden Ansprüche, wobei das Erstellen (403) der Bedienschnittstelle (200) für das erste Hausgerät (103) umfasst,
- Auswählen der ein oder mehreren generischen Bedienelemente (211) zur Bedienung des ersten Hausgeräts (103) auf Basis der Beschreibungsdaten (300);
- Festlegen, auf Basis der Beschreibungsdaten (300), von den einstellbaren Funktionalitäten und/oder Parameterwerten des ersten Hausgeräts (103) für die ausgewählten ein oder mehreren generischen Bedienelemente (211), um ein oder mehrere Bedienelemente (211) der Bedienschnittstelle (200) bereitzustellen.

13. Verfahren (400) gemäß Anspruch 12, wobei das Erstellen (403) der Bedienschnittstelle (200) für das erste Hausgerät (103) umfasst, Ausgeben von graphischen Darstellungen der ein oder mehreren Bedienelemente (211) der Bedienschnittstelle (200) auf der Eingabe/Ausgabeeinheit (104) des Steuergeräts (101).

14. Verfahren (400) gemäß einem der vorhergehenden Ansprüche, wobei
- das Verfahren (400) weiter umfasst, Ermitteln eines Typs des Steuergerätes (101) mit dem die Bedienschnittstelle (200) bereitgestellt werden soll; und
- die Bedienschnittstelle (200) auch in Abhängigkeit von dem Typ des Steuergeräts (101) erstellt wird.

15. Steuergerät (101), das eingerichtet ist, ein erstes Hausgerät (103) aus einer Vielzahl von unterschiedlichen Hausgeräten (103) zu bedienen, wobei das Steuergerät (101) umfasst,
- eine Kommunikationseinheit, die eingerichtet ist, über ein Netzwerk (102) mit dem ersten Hausgerät (103) zu kommunizieren;
- eine Eingabe/Ausgabeeinheit (104), die eingerichtet ist, eine Bedienschnittstelle (200) für das erste Hausgerät (103) anzuzeigen und Eingaben an der Bedienschnittstelle (200) zu erfassen; und
- einen Prozessor, der eingerichtet ist,
- eine Vielzahl von unterschiedlichen generischen Bedienelementen (211) zur Festlegung von unterschiedlichen Funktionalitäten und/oder Parametern der Vielzahl von unterschiedlichen Hausgeräten (103) bereitzustellen;
- einen Status des ersten Hausgeräts (103) zu ermitteln;
- Beschreibungsdaten (300) für das erste Hausgerät (103) zu ermitteln; wobei die Beschreibungsdaten (300) anzeigen, welche ein oder mehreren der Vielzahl von generischen Bedienelementen (211) in Abhängigkeit von dem Status zur Bedienung des ersten Hausgeräts (103) verwendet werden, und welche Funktionalitäten und/oder Parameterwerte des ersten Hausgeräts (103) über die verwendeten ein oder mehreren generischen Bedienelemente (211) eingestellt werden können; und
- die Bedienschnittstelle (200) für das erste Hausgerät (103) auf Basis der Vielzahl von unterschiedlichen generischen Bedienelementen (211) und auf Basis der Beschreibungsdaten (300) für das erste Hausgerät (103) sowie auf Basis des Status und eines Regelwerks zur regelbasierten Interpretation der Beschreibungsdaten zu erstellen und
- dynamisch anzupassen, wenn erkannt wird, dass sich der Status des ersten Hausgeräts verändert hat.

## Claims

1. Method (400) for creating an operating interface (200) for a first household appliance (103) from a plurality of household appliances (103), wherein said method (400) comprises
- providing (401) a plurality of different generic operating elements (211) for specifying different functionalities and/or parameters of the plurality of household appliances (103);
- determining a status of the first household appliance (103);
- determining (402) description data (300) for the first household appliance (103); wherein the description data (300) indicates
- which one or more of the plurality of generic operating elements (211) are used to operate the first household appliance (103), depending on the status, and
- which functionalities and/or parameter values of the first household appliance (103) can be set via the one or more generic operating elements (211) used; and
- setting (403) the operating interface (200) for the first household appliance (103) on the input/output unit (104) of a control unit (101) on the basis of the plurality of different generic operating elements (211) and on the basis of the description data (300) for the first household appliance (103), as well as on the basis of the status and a system of rules for the rule-based interpretation of the description data; and
- dynamically adapting the operating interface (200) for the first household appliance (103) to the input/output unit (104) of a control unit (101) on the basis of the plurality of different generic operating elements (211) and on the basis of the description data (300) for the first household appliance (103), as well as on the basis of the status and a system of rules for the rule-based interpretation of the description data, if it is detected that the status of the first household appliance has changed.

2. Method (400) according to claim 1, wherein a generic operating element (211)
- comprises a graphical representation for the output on the input/output unit (104) ;
- specifies how a set functionality and/or a set parameter value of a household appliance (103) is represented on the input/output unit (104); and/or
- specifies a mechanism by means of which a functionality and/or a parameter value can be set via the input/output unit (104).

3. Method (400) according to one of the preceding claims, wherein the plurality of generic operating elements (211) comprises one or more of the following:
- a program operating element (211), by means of which it becomes possible to select a program of a household appliance (103);
- a time operating element (211), by means of which a start time and/or a stop time for executing a program of a household appliance (103) can be specified;
- a duration operating element (211), by means of which the running time of a household appliance (103) can be specified;
- an options operating element (211), by means of which options of a household appliance (103) can be specified;
- a temperature operating element (211), by means of which an operating temperature of a household appliance (103) can be specified; and/or
- a start/stop operating element (211), by means of which the operation of a household appliance (103) can be started, stopped and/or paused.

4. Method (400) according to one of the preceding claims, wherein a generic operating element (211) for a specific functionality and/or for a specific parameter can be used for the purpose of setting the specific functionality and/or the specific parameter of the plurality of different household appliances (103).

5. Method (400) according to one of the preceding claims, wherein the functionalities and/or parameters comprise one or more of the following:
- predefined runtime programs of a household appliance (103);
- a start time and/or stop time of a predefined runtime program of a household appliance (103);
- a running time of a household appliance (103);
- settable options for the operation of a household appliance (103);
- an operating temperature of a household appliance (103); and/or
- a start, a stop and/or a pause of the operation of a household appliance (103).

6. Method (400) according to one of the preceding claims, wherein a generic operating element (211) is so configured as to generate a control signal, which indicates which version of a functionality and/or which parameter value has been set via the input/output unit (104).

7. Method (400) according to claim 6, further comprising
- capturing an input via an operating element (211) of the operating interface (200) of the first household appliance (103);
- generating a corresponding control signal by means of the operating element (211); and
- sending the control signal to the first household appliance (103) in order to effect a setting, corresponding to the input, at the first household appliance (103).

8. Method (400) according to one of the preceding claims, wherein
- the description data (300) for a generic program operating element (211) indicates which actual runtime programs can be selected for the first household appliance (103);
- the description data (300) for a generic options operating element (211) indicates which options can be selected for the first household appliance (103); and/or
- the description data (300) for a generic temperature operating element (211) indicates which temperatures can be selected for the first household appliance (103).

9. Method (400) according to one of the preceding claims, wherein the description data (300) specifies a dependency between a setting of a first operating element (211) and possible selectable functionalities and/or parameter values of a second operating element (211).

10. Method (400) according to one of the preceding claims, wherein
- the method (400) further comprises determining a feature level of the first household appliance (103); and
- the description data (300) indicates which one or more of the plurality of generic operating elements (211) are used to operate the first household appliance (103) depending on the feature level.

11. Method (400) according to claim 10, further comprising
- detecting that the status and/or the feature level of the first household appliance (103) has changed; and
- adapting the operating interface (200) depending on the changed status and/or the changed feature level.

12. Method (400) according to one of the preceding claims, wherein the creation (403) of the operating interface (200) for the first household appliance (103) comprises
- selecting the one or more generic operating elements (211) for the operation of the first household appliance (103) on the basis of the description data (300);
- specifying, on the basis of the description data (300), the settable functionalities and/or parameter values of the first household appliance (103) for the selected one or more generic operating elements (211), in order to provide one or more operating elements (211) of the operating interface (200).

13. Method (400) according to claim 12, wherein the creation (403) of the operating interface (200) for the first household appliance (103) comprises an output of graphical representations of the one or more operating elements (211) of the operating interface (200) on the input/output unit (104) of the control unit (101).

14. Method (400) according to one of the preceding claims, wherein
- the method (400) further comprises determining a type of the control unit (101) by means of which the operating interface (200) is to be provided; and
- the operating interface (200) is also created depending on the type of the control unit (101).

15. Control unit (101) which is so configured as to operate a first household appliance (103) from a plurality of different household appliances (103), wherein said control unit (101) comprises
- a communication unit which is so configured as to communicate with the first household appliance (103) via a network (102);
- an input/output unit (104) which is so configured as to display an operating interface (200) for the first household appliance (103) and to capture inputs at the operating interface (200); and
- a processor which is so configured as to
- provide a plurality of different generic operating elements (211) for specifying different functionalities and/or parameters of the plurality of different household appliances (103);
- determine a status of the first household appliance (103);
- determine description data (300) for the first household appliance (103), wherein the description data (300) indicates which one or more of the plurality of generic operating elements (211) are used to operate the first household appliance (103), depending on the status, and which functionalities and/or parameter values of the first household appliance (103) can be set via the one or more generic operating elements (211) used; and
- create the operating interface (200) for the first household appliance (103) on the basis of the plurality of different generic operating elements (211) and on the basis of the description data (300) for the first household appliance (103) as well as on the basis of the status and a system of rules for the rule-based interpretation of the description data and
- dynamically adapt, if it is detected that the status of the first household appliance has changed.

## Revendications

1. Procédé (400) de réalisation d'une interface de commande (200) pour un premier appareil ménager (103) parmi une pluralité d'appareils ménagers (103), dans lequel le procédé (400) comprend
- la mise à disposition (401) d'une pluralité d'éléments de commande génériques différents (211) pour la détermination de fonctionnalités et/ou paramètres différents de la pluralité d'appareils ménagers (103) ;
- l'établissement d'un état du premier appareil ménager (103) ;
- l'établissement (402) de données de description (300) pour le premier appareil ménager (103) ; dans lequel les données de description (300) indiquent,
- lequel ou lesquels parmi la pluralité d'éléments de commande génériques (211) est/sont utilisé(s) en fonction de l'état pour la commande du premier appareil ménager (103), et
- quelles fonctionnalités et/ou valeurs paramétriques du premier appareil ménager (103) l'élément ou les éléments de commande générique(s) (211) utilisé(s) permet/permettent d'adapter ;
- la réalisation (403) de l'interface de commande (200) pour le premier appareil ménager (103) sur l'unité de saisie/d'émission (104) d'un appareil de commande (101) sur la base de la pluralité d'éléments de commande génériques différents (211) et sur la base des données de description (300) pour le premier appareil ménager (103) ainsi que sur la base de l'état et d'un corpus de règles pour l'interprétation basée sur des règles des données de description ; et
- l'adaptation dynamique de l'interface de commande (200) pour le premier appareil ménager (103) sur l'unité de saisie/d'émission (104) d'un appareil de commande (101) sur la base de la pluralité d'éléments de commande génériques différents (211) et sur la base des données de description (300) pour le premier appareil ménager (103) ainsi que sur la base de l'état et d'un corpus de règles pour l'interprétation basée sur des règles des données de description, lorsqu'une modification de l'état du premier appareil ménager est détectée.

2. Procédé (400) selon la revendication 1, dans lequel un élément de commande générique (211)
- comprend une représentation graphique pour l'émission sur l'unité de saisie/d'émission (104) ;
- spécifie comment une fonctionnalité réglée et/ou une valeur paramétrique réglée d'un appareil ménager (103) est représentée sur l'unité de saisie/d'émission (104) ; et/ou
- détermine un mécanisme permettant de régler une fonctionnalité et/ou une valeur paramétrique via l'unité de saisie/d'émission (104).

3. Procédé (400) selon l'une des revendications précédentes, dans lequel la pluralité d'éléments de commande génériques (211) comprend un ou plusieurs des éléments suivants :
- un élément de commande de programme (211), lequel permet la sélection d'un programme d'un appareil ménager (103) ;
- un élément de commande temporel (211) permettant de déterminer une heure de démarrage et/ou une heure d'arrêt pour la réalisation d'un programme d'un appareil ménager (103) ;
- un élément de commande d'une période de temps (211) permettant de déterminer la durée de fonctionnement d'un appareil ménager (103) ;
- un élément de commande d'options (211) permettant de déterminer des options d'un appareil ménager (103) ;
- un élément de commande de température (211) permettant de déterminer une température de fonctionnement d'un appareil ménager (103) ; et/ou
- un élément de commande de démarrage/arrêt (211) permettant de démarrer, de stopper et/ou d'arrêter le fonctionnement d'un appareil ménager (103).

4. Procédé (400) selon l'une des revendications précédentes, dans lequel un élément de commande générique (211) peut s'utiliser pour une fonctionnalité déterminée et/ou pour un paramètre déterminé afin de régler la fonctionnalité déterminée et/ou le paramètre déterminé de la pluralité d'appareils ménagers différents (103).

5. Procédé (400) selon l'une des revendications précédentes, dans lequel les fonctionnalités et/ou paramètres comprennent un ou plusieurs parmi les éléments suivants :
- des programmes de déroulement prédéfinis d'un appareil ménager (103) ;
- un instant de démarrage et/ou d'arrêt d'un programme de déroulement prédéfini d'un appareil ménager (103) ;
- une durée de fonctionnement d'un appareil ménager (103) ;
- des options réglables pour le fonctionnement d'un appareil ménager (103) ;
- une température de fonctionnement d'un appareil ménager (103) ; et/ou
- un démarrage, un arrêt et/ou une interruption du fonctionnement d'un appareil ménager (103).

6. Procédé (400) selon l'une des revendications précédentes, dans lequel un élément de commande générique (211) est aménagé afin de générer un signal de commande indiquant quelle forme d'une fonctionnalité et/ou quelle valeur paramétrique a été réglée via l'unité de saisie/d'émission (104).

7. Procédé (400) selon la revendication 6, comprenant en outre,
- la saisie d'une saisie via un élément de commande (211) de l'interface de commande (200) du premier appareil ménager (103) ;
- la génération d'un signal de commande correspondant via l'élément de commande (211) ; et
- l'envoi du signal de commande au premier appareil ménager (103), afin d'induire un réglage correspondant à la saisie sur le premier appareil ménager (103).

8. Procédé (400) selon l'une des revendications précédentes, dans lequel les données de description (300)
- indiquent, pour un élément de commande de programme générique (211), quels programmes de déroulement concrets peuvent être sélectionnés pour le premier appareil ménager (103) ;
- indiquent, pour un élément de commande d'options générique (211), quelles options peuvent être sélectionnées pour le premier appareil ménager (103) ; et/ou
- indiquent, pour un élément de commande de température générique (211), quelles températures peuvent être sélectionnées pour le premier appareil ménager (103).

9. Procédé (400) selon l'une des revendications précédentes, dans lequel les données de description (300) spécifient une dépendance entre un réglage d'un premier élément de commande (211) et des fonctionnalités et/ou valeurs paramétriques sélectionnables possibles d'un deuxième élément de commande (211).

10. Procédé (400) selon l'une des revendications précédentes, dans lequel
- le procédé (400) comprend en outre l'établissement d'un niveau de développement du premier appareil ménager (103) ; et
- les données de description (300) indiquent lequel ou lesquels parmi la pluralité d'éléments de commande génériques (211) est/sont utilisé(s) en fonction du niveau de développement pour la commande du premier appareil ménager (103).

11. Procédé (400) selon la revendication 10, comprenant en outre,
- la détection de la modification de l'état et/ou du niveau de développement du premier appareil ménager (103) ; et
- l'adaptation de l'interface de commande (200) en fonction de l'état modifié et/ou du niveau de développement modifié.

12. Procédé (400) selon l'une des revendications précédentes, dans lequel la réalisation (403) de l'interface de commande (200) pour le premier appareil ménager (103) comprend,
- la sélection de l'élément ou des éléments de commande générique(s) (211) pour la commande du premier appareil ménager (103) sur la base des données de description (300) ;
- la détermination, sur la base des données de description (300), des fonctionnalités et/ou valeurs paramétriques réglables du premier appareil ménager (103) pour l'élément ou les éléments de commande générique(s) sélectionné(s) (211), afin de mettre à disposition un ou plusieurs éléments de commande (211) de l'interface de commande (200).

13. Procédé (400) selon la revendication 12, dans lequel la réalisation (403) de l'interface de commande (200) pour le premier appareil ménager (103) comprend l'émission de représentations graphiques de l'élément ou des éléments de commande (211) de l'interface de commande (200) sur l'unité de saisie/d'émission (104) de l'appareil de commande (101).

14. Procédé (400) selon l'une des revendications précédentes, dans lequel
- le procédé (400) comprend en outre l'établissement d'un type de l'appareil de commande (101) avec lequel l'interface de commande (200) doit être mise à disposition ; et
- l'interface de commande (200) est également réalisée en fonction du type de l'appareil de commande (101).

15. Appareil de commande (101), aménagé afin de commander un premier appareil ménager (103) parmi une pluralité d'appareils ménager différents (103), dans lequel l'appareil de commande (101) comprend,
- une unité de communication aménagée afin de communiquer via un réseau (102) avec le premier appareil ménager (103) ;
- une unité de saisie/d'émission (104) aménagée afin d'afficher une interface de commande (200) pour le premier appareil ménager (103) et de saisir des saisies sur l'interface de commande (200) ; et
- un processeur, aménagé
- afin de mettre à disposition une pluralité d'éléments de commande génériques différents (211) pour la détermination de fonctionnalités et/ou paramètres différents de la pluralité d'appareils ménagers différents (103) ;
- afin d'établir un état du premier appareil ménager (103) ;
- afin d'établir des données de description (300) pour le premier appareil ménager (103), les données de description (300) indiquant lequel ou lesquels parmi la pluralité d'éléments de commande génériques (211) est/sont utilisé(s) en fonction de l'état pour la commande du premier appareil ménager (103) et quelles fonctionnalités et/ou valeurs paramétriques du premier appareil ménager (103) l'élément ou les éléments de commande générique(s) (211) utilisé(s) permettent de régler ; et
- afin de réaliser l'interface de commande (200) pour le premier appareil ménager (103) sur la base de la pluralité d'éléments de commande génériques différents (211) et sur la base des données de description (300) pour le premier appareil ménager (103) ainsi que sur la base de l'état et d'un corpus de règles pour l'interprétation basée sur des règles des données de description ; et
- afin d'entreprendre une adaptation dynamique lorsqu'une modification de l'état du premier appareil ménager est détectée.
